(19) Europäisches Patentamt
European Patent Office
Office européen des brevets

(11) Publication number: **0 375 615 A2**

(12) # EUROPEAN PATENT APPLICATION

(21) Application number: 89810948.3

(22) Date of filing: 12.12.89

(51) Int. Cl.[5] C02F 5/10, C02F 5/12, C02F 5/14

(30) Priority: 21.12.88 GB 8829830

(43) Date of publication of application: 27.06.90 Bulletin 90/26

(84) Designated Contracting States: DE ES FR GB IT NL

(71) Applicant: CIBA-GEIGY AG
Klybeckstrasse 141
CH-4002 Basel(CH)

(72) Inventor: Harris, Arthur, Dr.
15 Haven Close Hazel Grove
Stockport Cheshire(GB)

(54) **Method of treating water containing fertilisers.**

(57) The invention provides a method for preventing or reducing the blocking of holes or emitters or other components in a drip, trickle or mini sprinkler irrigation system through which irrigation water containing a fertiliser is applied which comprises adding to the irrigation water 0.1 to 100 ppm, based on the feed water, of at least one anionic compound having threshold properties towards alkaline earth metal salts, the anionic compound being a homo- or co-polymer of acrylic or methacrylic acid, a copolymer of maleic anhydride or an organophosphorus compound, or a water-soluble salt of such a compound.

EP 0 375 615 A2

# METHOD OF TREATING WATER CONTAINING FERTILISERS

The present invention relates to the treatment of irrigation water used in drip, trickle, and mini sprinkler irrigation to prevent blocking of the emitters, and other irrigation system components.

Currently the world is experiencing a shortage of water, particularly for use in irrigation and agriculture. Moreover the quality of the water that is available is becoming poorer, in particular, the concentration of dissolved salts and organic materials is increasing. The use of poorer quality water for irrigation leads to problems of a build up of salts in the soil.

The problem of soil salination is particularly acute where traditional irrigation techniques, such as flooding, are used. The problem of soil salination can be reduced by modern irrigation techniques, especially drip irrigation, where the quantity of water supplied to the soil is quite small and controlled. These techniques also provide a convenient way of applying fertilisers.

The application of fertilisers using these modern irrigation techniques, however, often gives rise to blockage problems. For instance, ammonium compounds are commonly used as a source of nitrogen but when used in the modern irrigation systems tend to result in the deposition of calcium carbonate and consequent blockage of irrigation system components if the water contains bicarbonate and calcium species. Inorganic polyphosphates have been used to prevent the precipitation of calcium carbonate in irrigation water, but they lead to the precipitation of calcium phosphate, which also results in blockages. The use of inorganic phosphates as fertilisers in modern irrigation systems similarly results in precipitation of a calcium phosphate and consequent blockages if the irrigation water contains calcium species.

The use of phosphoric acid or solutions of urea in sulphuric acid as fertilisers in irrigation water can prevent precipitation problems. However, such chemicals require very careful handling and the use of expensive corrosion-resistant equipment. Furthermore, when applied to soil in irrigation water, they tend to have a detrimental effect on soil structure and plant growth.

There is a need for a method of controlling precipitation of scale-forming salts when fertilisers are used in modern irrigation systems which avoids the disadvantages of previous methods and facilitates the economic application of fertilisers in irrigation water.

We have now found that scale control agents used to control scale on heat exchangers etc. can be effectively applied to irrigation water containing fertilisers to prevent blockage of emitters and other irrigation system components. These chemicals may act as threshold agents towards the precipitation of scale forming salts or as dispersants which would then carry the precipitate through the system without causing any blockages and prevent the salts from acting as a binder for other materials which may be present in the water and cause blockages.

Accordingly the present invention provides a method for preventing or reducing the blocking of holes or emitters or other components in a drip, trickle or mini sprinkler irrigation system through which irrigation water containing a fertiliser is applied, which method comprises adding to the irrigation water 0.1 to 100 ppm, based on the water, of at least one anionic compound having threshold properties towards alkaline earth metal salts, e.g. $CaCO_3$, $CaSO_4$ or $Ca_3(PO_4)_2$, said anionic compound being a homo- or co-polymer of acrylic acid or methacrylic acid, a hydrolysed co-polymer of maleic anhydride, an organophosphorus compound, or a water-soluble salt of said anionic compound, or a mixture of said anionic compounds or salts.

Acrylic polymers which may be used generally have a molecular weight up to 10,000 and include polyacrylic acid, polymethacrylic acid, copolymers of acrylic and/or methacrylic acid with one or more other ethylenically unsaturated monomers such as those listed below as suitable for copolymerisation with maleic annydride, or telomers of acrylic and/or methacrylic acid e.g. prepared in the presence of hypophosphonous acid or a salt thereof as telogen, i.e. phosphino(meth)acrylic acid telomers. Examples of suitable telomers are given in GB patent specification No. 1458235.

Preferred acrylic polymers are polyacrylic acid, especially having a molecular weight of 2000 to 6000; copolymers of acrylic acid with a hydroxyalkyl acrylate, especially 2-hydroxypropyl acrylate; copolymers of acrylic acid with sulfonic acid-group containing ethylenic monomers such as those described in United States Patent 4798683, particularly 2-acrylamido-2-methylpropylsulfonic acid and the corresponding methacrylamido compound; and phosphinopolyacrylates (phosphinoacrylic acid telomers), especially those having a molecular weight of 500 to 1500.

Maleic copolymers which may be used generally have a molecular weight up to 10,000 and include hydrolysed copolymers of maleic anhydride with one or more other ethylenically unsaturated monomers. These other monomers may be selected from a wide range of compounds, for example, acrylic acid, methacrylic acid, crotonic acid, itaconic acid, aconitic acid, itaconic anhydride, ethyl acrylate, methyl

methacrylate, acrylonitrile, acrylamide, vinyl acetate, styrene, alpha-methyl styrene, styrene sulfonic acid, vinyl sulfonic acid, 2-acrylamido-2-methylpropane sulfonic acid, methyl vinyl ketone, acrolein, ethylene, propylene, or mixtures thereof. Examples of maleic polymers which may be used are described in GB patent specification No. 1414918.

Preferred maleic copolymers are hydrolysed terpolymers of maleic anhydride with an alkyl acrylate, especially ethyl acrylate, and a vinyl carboxylate, especially vinyl acetate, particularly such copolymers in the form of the sodium salts; and hydrolysed copolymers of maleic anhydride with a vinyl group-containing sulfonic acid, especially styrene sulfonic acid.

Organophosphorus anionic compounds which may be used include phosphonic acids and their salts. Such acids and salts include:

1. Those of the general formula I

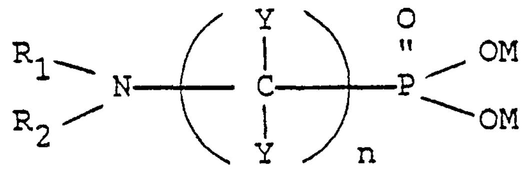

(I)

where $R_1$ is hydrogen or a $C_1$-$C_{30}$ aliphatic hydrocarbon group or a group of the formula

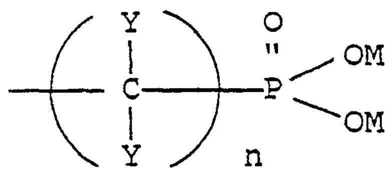

(IA)

$R_2$ has the same meaning as $R_1$ or a group of the formula

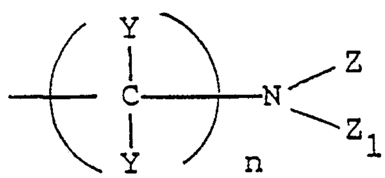

(IB)

where Z is hydrogen or a group of formula IA and $Z_1$ is hydrogen or a group of formula IA or of formula IC

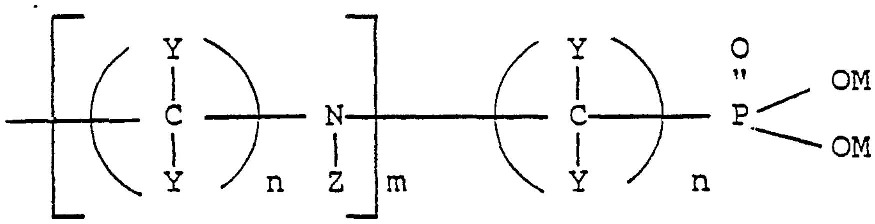

(IC)

where n is 1 to 30, m is 1 to 30, Y is hydrogen or a $C_1$-$C_4$ alkyl group, and M is hydrogen, an alkali metal or ammonium. The preparation of acids of formula I is described in US Patents 3234124 and 3298956.

2. Those of the general formula II

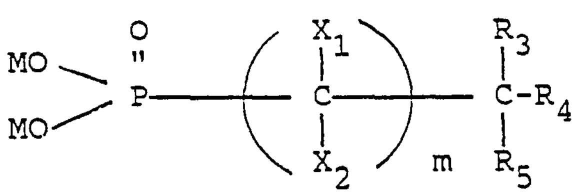

(II)

where $X_1$ and $X_2$ are the same or different and are hydrogen, hydroxyl, COOM or $C_1$-$C_4$ alkyl which is optionally substituted by hydroxyl, COOM or $PO_3M_2$; $R_3$ and $R_4$ are the same or different and are hydrogen, hydroxyl, amino, COOM or $C_1$-$C_4$ alkyl; $R_5$ is COOM or $PO_3M_2$; M is hydrogen, an alkali metal or ammonium, and m is 0 to 5. The preparation of acids of formula II is described in US Patent 4020101.

3. Those of the general formula

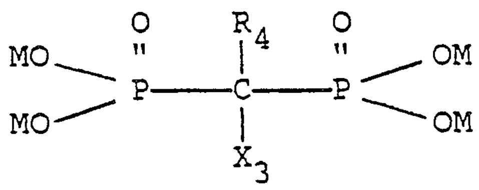

(III)

where $R_4$ is hydrogen or $C_1$-$C_6$ alkyl; $X_3$ is hydroxyl or amino; and M is hydrogen, an alkali metal or ammonium.

Preferred anionic organophosphorus compounds include phosphonic acids and salts of formula I where $R^1$ and $R^2$ are each a group of formula IA, Y is hydrogen or methyl and n is 1 to 10, for example amino tris-(methylene phosphonic acid) and amino tris(ethylene phosphonic acid); phosphonic acids and salts of formula I where $R^1$ is a group of formula IA, $R^2$ is a group of formula IB, Y is hydrogen or methyl, Z is a group of formula IA, $Z_1$ is a group of formula IA or IC, n is 1 to 10 and m is 1 to 10, for example ethylenediamine tetra(methylene phosphonic acid), diethylenetriamine penta(methylene phosphonic acid), ethylene diamine tetra(ethylene phosphonic acid), diethylenetriamine penta(ethylene phosphonic acid), triethylenetetramine hexa(methylene phosphonic-acid), tetraethylenepentamine hepta(methylene phosphonic acid), and hexamethylenediamine tetra(methylene phosphonic acid).

Other preferred anionic organophosphorus compounds include phosphono carboxylic acids and salts of formula II where m is O, $R^3$ is hydrogen, hydroxyl or methyl, $R^4$ is hydrogen and $R^5$ is COOM; or where m is 1, $X_1$ is hydrogen, methyl or $CH_2CH_2COOM$, $X_2$ is hydrogen, methyl or COOM, $R^3$ is hydrogen or methyl, $R^4$ is hydrogen or methyl and $R^5$ is COOM, for example phosphonoacetic acid, hydroxyphosphonoacetic acid, 2-phosphonopropionic acid, 2-methyl-3-phosphonopropionic acid and 2-phosphonobutane-1,2,4-tricarboxylic acid.

Further preferred anionic organophosphorus compounds include phosphonic acids and salts of formula III where $R^4$ is hydrogen or methyl and $X_3$ is hydroxyl, for example 1-hydroxy-ethylidene-1,1-diphosphonic acid and hydroxy-methylene diphosphonic acid.

Especially preferred anionic organophosphorus compounds are amino tris(methylene phosphonic acid), diethylenetriamine penta(methylene phosphonic acid), 2-phosphonobutane-1,2,4-tricarboxylic acid and 1-hydroxyethylidene-1,1-diphosphonic acid.

Particularly interesting mixtures of anionic compounds are those comprising two or more of polyacrylic acid or its copolymers, hydrolysed copolymers of maleic anhydride, the copolymers including substituted, e.g. sulfonated, copolymers, 1-hydroxyethylidene-1,1-diphosphonic acid and 2-phosphono- butane-1,2,4-tricarboxylic acid.

In all cases the threshold agents may be used in the form of their water soluble salts, especially alkali metal salts. The amount of threshold agent used may be from 0.1 to 100 ppm, preferably from 0.5 to 10 ppm and most preferably from 0.5 to 5 ppm, based on the amount of water treated. The threshold agent will normally be added to the water before it is fed into the drip irrigation system.

In a preferred method, as described above, the fertiliser provides one or more of the nutrients nitrogen, phosphorus and potassium.

In the present invention it is possible to use any fertiliser, including potassium compounds, such as potassium nitrate, potassium sulphate, potassium dihydrogen phosphate and dipotassium hydrogen phosphate; nitrogen compounds such as sodium nitrate, aqueous ammonia and ammonium sulphate; phosphorus compounds such as polyphosphates e.g. sodium or ammonium polyphosphate, or sodium orthophosphate; and compounds containing other elements such as magnesium e.g. magnesium sulphate. Some of the compounds mentioned contain more than one nutrient element and mixtures of compounds can be used to give an appropriate balance of nutrients for the crop being fertilised. Any of the fertilisers may be used according to the present invention without causing any problems due to blockages.

The threshold agents added to the irrigation system in accordance with the invention do not interfere with the effectiveness of the fertiliser or chemicals added for other purposes e.g. herbicides, biocides, corrosion inhibitors etc.

The invention is illustrated by the following Examples which show how the threshold agents prevent deposition of alkaline earth metal salts from irrigation water containing fertilisers. Some of the experiments are carried out under accelerated conditions.

## Examples

The ability of the threshold agent in preventing the deposition of alakline earth metal salts is measured by mixing together solutions containing the respective cations and anions to give a solution which precipitates under the conditions specified. Various concentrations of the threshold agents are added to the cation solution before mixing. After a certain period of time the concentration of the cation left in solution is measured and the % inhibition of precipitation (I%) is calculated using the formula:-

$$I\% = \left[ \frac{C\ final - C\ blank}{C\ initial - C\ blank} \right] \times 100$$

where
C final = cation concentration at end of test
C initial = cation concentration at start of test
C blank = cation concentration at end of test in absence of a threshold agent
Agents showing I% >50% are considered suitable for the prevention of deposits.

| 1. Calcium Carbonate Inhibition | |
|---|---|
| Conditions: $Ca^{2+}$ 125 ppm, $CO_3^{2-}$ 183 ppm, pH 10.5, 25° C, 24 hours, additive dose 10 ppm. | |
| Additive | I% |
| Polyacrylic acid (M.Wt 5100) | 74 |
| Polyacrylic acid (M.Wt 2000) | 93 |
| Amino tri(methylene phosphonic acid) | 91 |
| 1-Hydroxyethylidene 1,1-diphosphonic acid | 90 |
| 2-phosphonobutane-1,2,4-tricarboxylic acid | 94 |
| Maleic anhydride/ethyl acrylate/vinyl acetate copolymer sodium salt (M.Wt. 700-1000) | 63 |
| Phosphinopolyacrylate (M.Wt 1200) which is Example 5 from British Patent Specification 1458235. | 97 |

| 2. Calcium Phosphate Inhibition | |
|---|---|
| Conditions: $Ca^{2+}$ 100 ppm, $PO_4^{3-}$ 10 ppm, pH 8.0, 60° C, 24 hours, additive dose 10 ppm. | |
| Additive | I% |
| Maleic anhydride/ethyl acrylate/vinyl acetate copolymer sodium salt (M.Wt. 700-1000) | 69 |
| Phosphinopolyacrylate (M.Wt 600) | 62 |
| Phosphinopolyacrylate (M.Wt 1200) | 52 |
| Acrylic acid/hydroxypropyl acrylate copolymer (M.Wt 6000) | 94 |
| Hydrolysed maleic anhydride/styrene sulphonic acid copolymer (M.WT 2500) | 88 |
| Phosphinopolyacrylate with sulphonic groups (a typical example from EP 150706) | 100 |
| Amino tri(methylene phosphonic acid) | 75 |
| 1-Hydroxyethylidene 1,1-diphosphonic acid | 75 |
| Polyacrylic acid (M.Wt 2000) | 78 |
| 2-Phosphonobutane-1,2,4-tricarboxylic acid | 66 |

| 3. Calcium Sulphate Inhibition | |
|---|---|
| Conditions: $Ca^{2+}$ 2940 ppm, $SO_4^{2-}$ 7200 ppm, pH 8.5, 70 °C, 24 hours, additive dose 10 ppm. | |
| Additive | I% |
| Maleic anhydride/ethyl acrylate/vinyl acetate copolymer sodium salt (M.Wt. 700-1000) | 73 |
| Phosphinopolyacrylate (M.Wt 1200) | 99 |
| Polyacrylic acid (M.Wt 2000) | 100 |

## Claims

1. A method for preventing or reducing the blocking of holes or emitters or other components in a drip, trickle or mini sprinkler irrigation system through which irrigation water containing a fertiliser is applied which comprises adding to the irrigation water 0.1 to 100 ppm, based on the water, of at least one anionic compound having threshold properties towards alkaline earth metal salts, said anionic compound being a homo- or co-polymer of acrylic acid or methacrylic acid, a hydrolysed copolymer of maleic anhydride, an organophosphorus compound or a water-soluble salt of said anionic compound, or a mixture of said anionic compounds or salts.

2. A method as claimed in claim 1, in which the anionic compound is polyacrylic acid, polymethacrylic acid, a copolymer of acrylic and/or methacrylic acid with one or more other ethylenically unsaturated monomers, or a phosphinoacrylic acid or phosphinomethacrylic acid telomer.

3. A method according to claim 2, in which the anionic compound is polyacrylic acid; a copolymer of acrylic acid with a hydroxyalkyl acrylate; a copolymer of acrylic acid with a sulfonic acid group containing ethylenic monomer; or a phosphinopolyacrylate.

4. A method according to claim 3, in which the anionic compound is polyacrylic acid having a molecular weight of 2000 to 6000, a copolymer of acrylic acid and 2-hydroxypropyl acrylate, a copolymer of acrylic acid with 2-acrylamido-2-methylpropylsulfonic acid or 2-methylacrylamido-2-methylpropylsulfonic acid or a phosphinopolyacrylate having a molecular weight of 500 to 1500.

5. A method according to claim 1, in which the anionic compound is a hydrolysed terpolymer of maleic anhydride with an alkyl acrylate and a vinyl carboxylate.

6. A method according to claim 5, in which the terpolymer is of maleic anhydride, ethyl acrylate and vinyl acetate.

7. A method according to claim 1, in which the anionic compound is of the general formula I

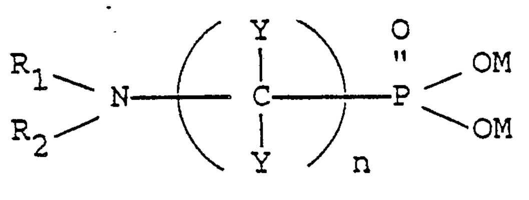

(I)

where $R_1$ is hydrogen or a $C_1$-$C_{30}$ aliphatic hydrocarbon group or a group of the formula

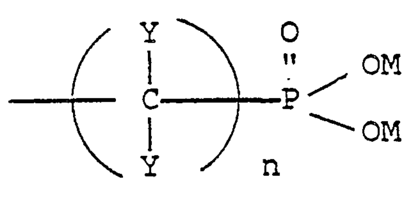

(IA)

$R_2$ has the same meaning as $R_1$ or is a group of the formula

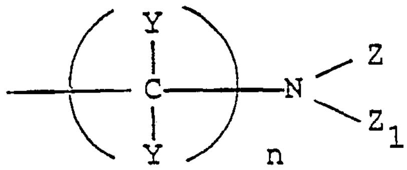

(IB)

where Z is hydrogen or a group of formula IA and $Z_1$ is hydrogen or a group of formula IA or of formula IC

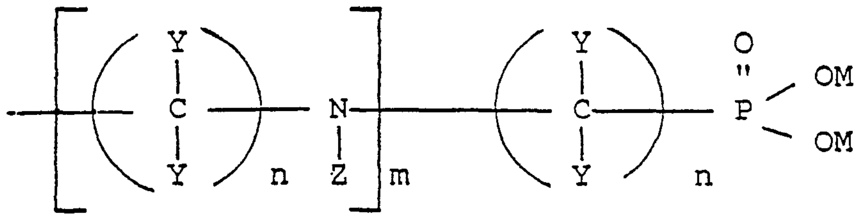

(IC)

where n is 1 to 30, m is 1 to 30, Y is hydrogen or a $C_1$-$C_4$ alkyl group, and M is hydrogen, an alkali metal or ammonium.

8. A method according to claim 7, in which $R^1$ and $R^2$ are each a group of formula IA, Y is hydrogen or methyl and n is 1 to 10 or $R^1$ is a group of formula IA, $R^2$ is a group of formula IB, Y is hydrogen or methyl, Z is a group of formula IA, $Z_1$ is a group of formula IA or IC, n is 1 to 10 and m is 1 to 10.

9. A method according to claim 8, in which the anionic compound is amino tris(methylene phosphonic acid) or diethylene triamine penta(methylene phosphonic acid).

10. A method according to claim 1, in which the anionic compound is one of the general formula II

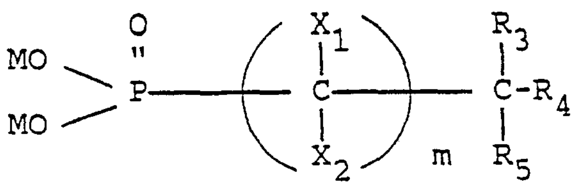

(II)

where $X_1$ and $X_2$ are the same or different and are hydrogen, hydroxyl, COOM, $C_1$-$C_4$ alkyl or $C_1$-$C_4$ alkyl substituted by hydroxyl, COOM or $PO_3M_2$; $R_3$ and $R_4$ are the same or different and are hydrogen, hydroxyl, amino, COOM or $C_1$-$C_4$ alkyl; $R_5$ is COOM or $PO_3M_2$; M is hydrogen, an alkali metal or ammonium, and m is 0 to 5.

11. A method according to claim 10, in which m is O, $R^3$ is hydrogen, hydroxyl or methyl, $R^4$ is hydrogen and $R^5$ is COOM; or m is 1, $X_1$ is hydrogen, methyl or $CH_2CH_2COOM$, $X_2$ is hydrogen, methyl or COOM, $R^3$ is hydrogen or methyl, $R^4$ is hydrogen or methyl and $R^5$ is COOM.

12. A method according to claim 11, in which the anionic compound is 2-phosphonobutane-1,2,4-tricarboxylic acid.

13. A method according to claim 1, in which the anionic compound is one of the general formula III

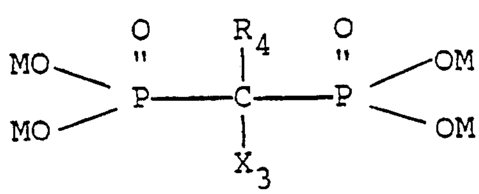

(III)

where $R_4$ is hydrogen or $C_1$-$C_6$ alkyl; XI is hydroxyl or amino; and M is hydrogen, an alkali metal or ammonium.

14. A method according to claim 13, in which $R^4$ is hydrogen or methyl and $X_3$ is hydroxyl.

15. A method according to claim 14, in which the anionic compound is 1-hydroxyethylidene-1,1-diphosphonic acid.

16. A method according to claim 1, in which there is used a mixture of two or more anionic compounds selected from the group consisting of polyacrylic acid, copolymers of acrylic acid, hydrolysed copolymers

of maleic anhydride, 1-hydroxyethylidene-1,1-diphosphonic acid, 2-phosphonobutane-1,2,4-tricarboxylic acid or water-soluble salts thereof.

17. A method according to claim 1, in which the amount of anionic compound used is 0.5 to 10 ppm.

18. A method according to claim 17, in which the amount of anionic compound used is 0.5 to 5 ppm.

19. A method according to claim 1, in which the fertiliser provides one or more of the nutrients nitrogen, phosphorus and potassium.